# EUROPEAN PATENT SPECIFICATION

(11) **EP 1 238 748 B1**
(45) Date of publication and mention of the grant of the patent: **27.12.2006**
(21) Application number: 02004500.1
(22) Date of filing: 27.02.2002
(51) Int. Cl.: B23K 26/16, B23K 26/32, B23K 26/24

(54) **Method and device for laser welding of two or more overlapped metal sheets, and sheet clamping device therefor**
Verfahren und Vorrichtung zum Laserschweissen von zwei oder mehr überlappenden Blechen und Einspannvorrichtung dafür
Procédé et appareil pour souder par laser deux ou plusieurs tôles se recouvrant et dispositif de serrage de feuilles pour ceci

(30) Priority: 02.03.2001 IT TO010186
(43) Date of publication of application: 11.09.2002
(73) Proprietor: COMAU S.p.A., 10095 Grugliasco (Torino) (IT)
(72) Inventor: Menin, Roberto, 10080 Vico Canavese (Torino) (IT)
(74) Representative: Notaro, Giancarlo

(56) References cited:
- WO-A-01/12378
- PATENT ABSTRACTS OF JAPAN vol. 1998, no. 11, 30 September 1998 (1998-09-30) & JP 10 156566 A (NISSAN MOTOR CO LTD), 16 June 1998 (1998-06-16)

## Description

The present invention relates to a method and a system for laser welding of overlapped metal sheets.

The welding of overlapped metal sheets by means of a laser beam has been already proposed since a long time, particularly in the automotive industry, for the production of motor-vehicle bodies or parts thereof, in lieu of the more conventional electric spot welding. After an initial increasing spread of the laser welding technique approximately starting from 1990 (see for example European patent EP-B-0 440 001 in the name of Comau), the application of this technology in the automotive industry has seen a stop due to the increasing use in a motor-vehicle bodies of zinc plated sheets, i.e. sheets coated with a protective zinc layer for example deposited by galvanization in motor-vehicle bodies. Zinc has a melting temperature of 419°C, and a vaporization temperature of 906°C, whereas the steel forming the sheet typical as a melting temperature around 1530°C. In order to weld the sheets, it is necessary to bring the steel of which they are constituted to melting, which means that the welding is carried out in the presence of zinc vapours. In the case of electric spot welding, the vapours do not give rise to any substantial drawbacks, since the steel of the sheets begins to melt at the contact area between the sheets (because this area is that having the highest electric resistivity) and due to that the welding electrodes apply also a pressure on the sheets which causes the espulsion from the contact area of the sheets of any quantities in ecess of the melting bath and the zinc vapours. In the case of laser welding, instead, the melting bath starts to be created at the outer surface of the sheet where the laser beam is directed. As soon as the area of the melting bath, which typical assumes a keyhole-shaped form, extends down to the contact area between the sheets, the zinc vapours meanwhile created at this area escaped outwardly through the route of least resistance, constituted by the melting bath. Therefore, spray of melted metal occur which jeopardize the quality and strength of the welded joint, as well as the aesthetical appearance of the product thus obtained.

Various solutions have been proposed in the past in the endeavour to overcome the above-mentioned drawback. A first solution is to modify the shape of at least one of the sheets at the welding area so as to define a gap between the overlapped sheets which can be esploited by the zinc vapours to escape upwardly (see for example US-A-4 682 002 and US-A-4 916 284). A similar solution lies in providing spacing elements between the sheets, again in order to define a gap for evacuation of the zinc vapours (WO-A-99/08829, JP-A-5318155). All the above-indicated known solutions have the drawback however to require that an additional operation is carried out with respect to the conventional work cycle, since it is necessary to form the above-mentioned spacing deformed portions in the sheets or anyhow to apply additional elements thereto, which increases time and costs of production.

A sheet welding method according to the preamble of claim 1 is known from JP-A-10156566.

The object of the present invention is that of overcoming the above-described technical problem in a simple and efficient way.

In order to achieve this object, the invention provides a method for laser welding of two or more metal sheets which are overlapped to each other, as set forth in claim 1.

Due to the above-mentioned features, the method according to the invention is able to successfully overcome the problem of the evacuation of zinc vapours which are created during laser welding of overlapped zinc-plated sheets. As in the case of the above-mentioned prior art, the vapours are let to escape through a gap defined between the sheets, so that the vapours are not encouraged to pass through the melting bath, which would give origin to the above-mentioned drawbacks. However, while in the case of the prior art the gap for evacuation of the vapours is obtained by a permanent deformation of at least one of the sheets before welding is carried out, or by the introduction of spacing elements between the sheets, in the case of the present invention the sheets are not subjected to any permanent deformation, nor spacing means are provided there between. As a matter of fact, in the case of the invention, the elastic return is simply exploited of at least one of the sheets from the condition of complete contact, in which this sheet is temporarely brought by the clamping means by exploiting the elastic deformability of the sheet, to a less deformed condition which is reached by partially opening again the clamping means until a predetermined position is obtained. In this manner, it is possible to ensure that a gap between the sheets of substantially predetermined dimensions is obtained, which is exploited by the zinc vapours to escape outwardly, without passing through the welding melting bath.

In the invention, the above-mentioned clamping means are provided with sensor means adapted to detect when the condition of complete contact of the sheets is reached at the end of the above-mentioned first stage. These sensor means can be constituted by any type of direct or indirect sensor adapted to detect when this condition is reached, such as force or pressure sensor (which detects when a threshold value is passed) or a sensor of the speed of the movable part of the clamping means (which detects when this part is stopped) or a sensor of movement or a sensor of the electric current absorbed by the electric motor which controls the clamping device (in case this device is electrically actuated) or any other known type of sensor.

The invention is also directed to a welding system as set forth in claim 3.

In the system according to the invention, the clamping means are provided, as already indicated, with sensor means adapted to detect when the condition of complete contact of the sheets is reached, and said actuating means are controlled by control means which causes the clamping means to be stopped at the condition of complete contact of the sheet at the end of said first stage.

The clamping means comprise at least a movable member which is movable between an imoperative position and an operative position, and said control means cause the movable member to be stopped at the end of said second step when they detect that a predetermined position is reached.

The actuating means may comprise an electric motor or a fluid actuator or a piezoelectric actuator or a shape memory alloy actuator or any other means.

Further features and advantages of the invention will become readily apparent from the following description with reference to the annexed drawings, given purely by way of non limiting example, in which:
- Figure 1 is a diagrammatic side view of two zinc-plated steel sheets which are to be welded by the method according to the invention and a clamping device used in the method, shown in its inoperative condition,
- Figure 2 shows the same parts of figure 1, but with the clamping device in its operative condition,
- Figure 3 is a view taken along line III-III of the figure 2,
- Figure 4 shows a subsequent stage of the method according to the invention,
- Figure 5 is a block diagram which shows the welding system according to the invention,
- Figure 6 is a diagrammatic and partial side view of a motor-vehicle body to which the method according to the invention is applied,
- Figure 7 is a diagrammatic cross-sectional view, at an enlarged scale, taken along line VII-VII of figure 6, with the clamping device shown in its inoperative condition, and
- Figures 8, 9 show the same structure of figure 7 in two subsequent stages of the method according to the invention.

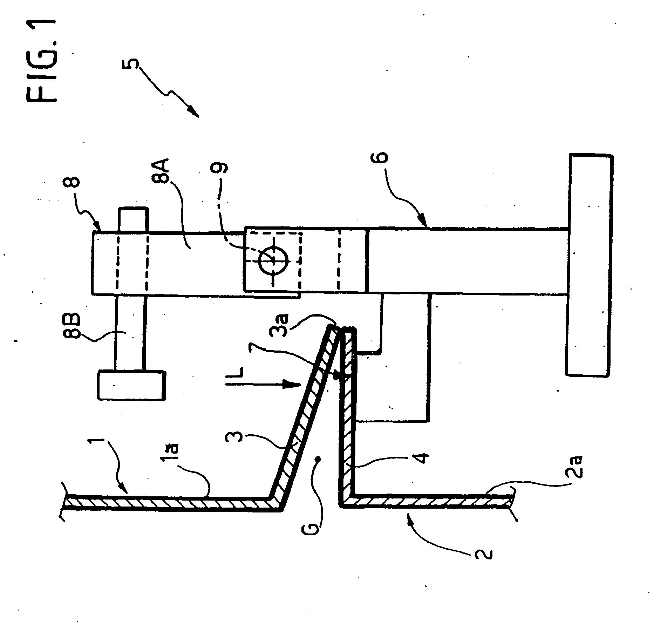

Figures 1-5 provide a first diagrammatic representation of the method according to the invention. In these figures there are shown two steel sheets 1, 2 each provided with a zinc protective layer, respectively designated by 1a and 2a. The drawings only show the portion of the sheets adjacent to the area where these sheets must be welded to each other. To this end, the sheets 1, 2 have two flanges 3, 4 which are to be welded to each other in an overlapped position by means of a laser beam. Figures 1-4 only show, beside the sheets to be welded 1, 2, a clamping device 5, which is for clamping the flanges 3, 4 of sheets 1, 2 to each other for carrying out welding. These figures do not show instead the means for welding tipically consisting of a device for focusing a laser beam which is directed on the two flanges 3,4 at the welding area.

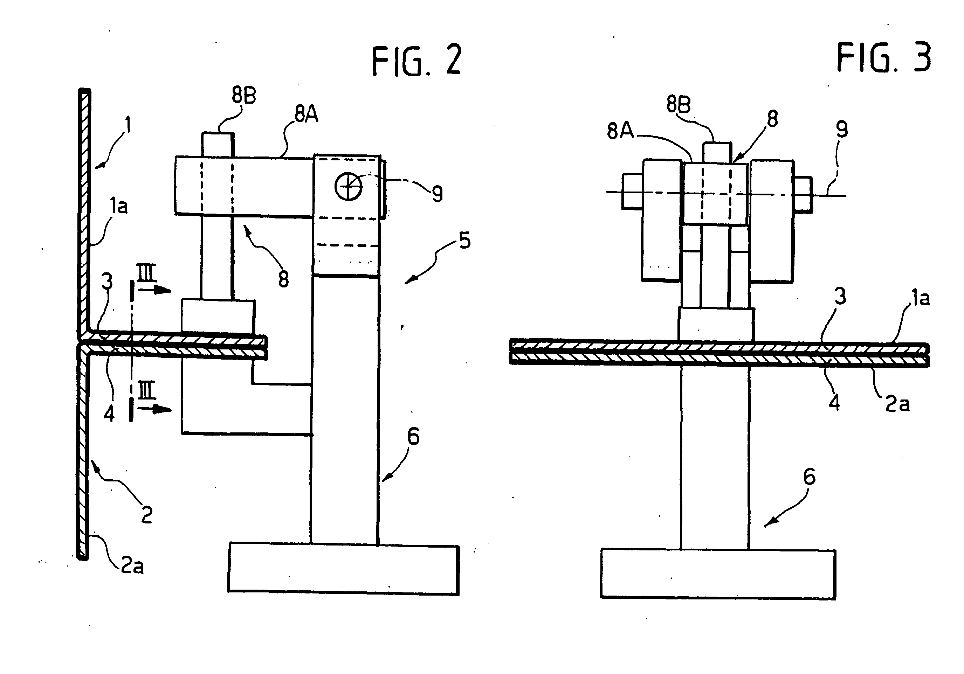

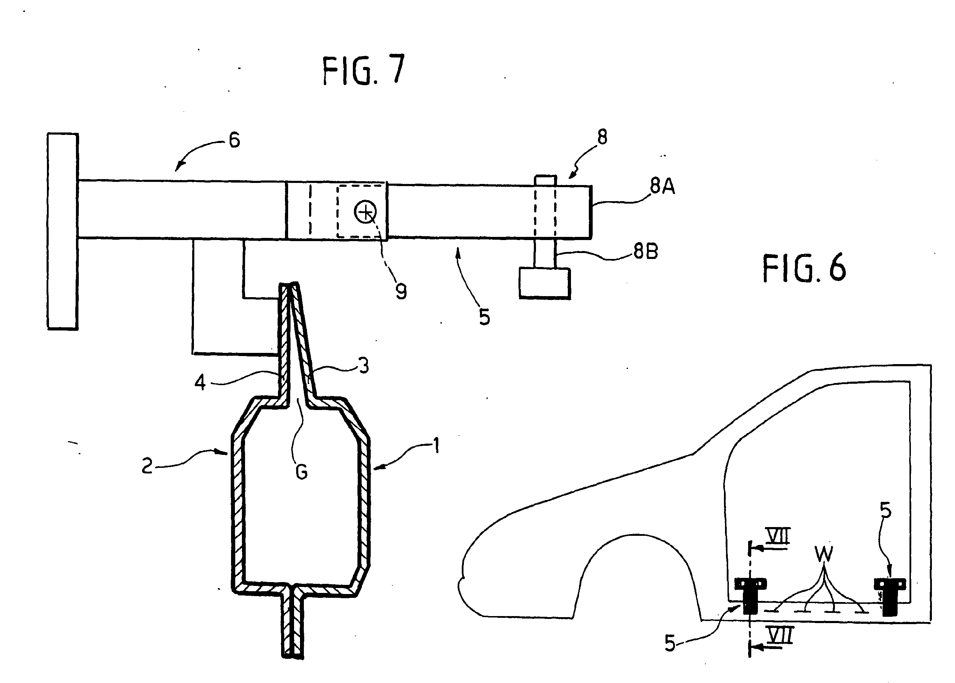

As it will be illustrated with reference to figure 6, flanges 3,4 are tipically clamped by means of a plurality of clamping devices 5, while the laser bean is displaced relative to the sheets at the area between the clamping devices 5, so as to provide laser welded sections W. In figure 1 there is only diagramaticaly shown an arrow L which indicates the direction of the welding laser beam on the sheets. The details of construction of the laser welding device and of the means for moving the laser beam with respect to the stucture to be welded are not illustrated here, since they can be made in any known way and since these details, taken alone, do not fale within the scope of the invention. The deletion of these details from the drawings further renders the latter simpler and easier to understand. The same applies to the construction of the clamping device 5. Clamping devices of this type are normally used in the automotive industry for clamping the metal sheets constituting a car body while a conventional electric spot welding is carried out.The specific arrangement of the clamping device may widely vary, depending upon the shape of the sheets to be clamped and the application means, the clamping device 5 usually has a structure 6 defining a reference and supporting plane 7 of one of the sheets (in the illustrated case for supporting flange 4 of sheet 2) and a clamping moveable member 8 which is pirotally mounted around an axis 9 on the structure 6 between an opened inoperative position (figure 1) and a closed operative position (figure 2). An example of clamping device may be found in the European Patent EP-B-0 909 607 in the name of Comau spa. This structure 6 can be fixed, or also provided with the possibility of a limited movement for self-centering of the clamping device on the area of the structure to be welded. Further more, obviously, it is possible that the clamping device comprises a second moveable member which is moveable between an inoperative position and an operative position for defining the support 7.

Figures 1-4 do not show the actuating means which drive the movement of the movable member 8 of the clamping device 5. These actuating means are designated by 10 in the block diagram of figure 5. The most usual technique used for actuating the clamping devices is the use of fluid cylinders. However, also clamping devices have been developed having an electric actuation. These devices tipically comprise an electric motor whose output shaft is connected by means of a reducing gear unit to the movable member of the clamping device. This solution may be particularly advantageous in the case of the embodiment of the invention which is shown here even, if the possibility is not excluted to use actuating means constituted by fluid cylinders or actuators of any other type, as specified above.

With reference to figure 5, with the clamping means 5, and more specifically with the movable member 8 of the clamping device there are associated, in the case of the specific illustrated example, both a force or pressure sensor 11 and a position sensor 12. Also the details of construction and the arrangements of sensors 11, 12 are not shown here, since these sensors may be made in any known way. The position sensor may be associated both directly with the movaeble member 8 and with any element of the kinematic chain which connects the actuading means to the movable member. Sensors 11,12 are able to send output signals to an electric control unit 13 which controls the actuating means 10 according to the signals received from sensors 11, 12 and according to a prediterminated logic which will be decribed in the following.

Also with reference to figure 1, an essential feature of the invention lies in that at least one of the sheets to be welded (sheet 1 in the case illustrated here) is shaped or arranged such that it is elastically deformed, following the engagement thereon of the clamping member 8, from a rest condition, in which a gap G is defined between the overlapped flanges 3,4 of sheets 1,2, to a condition in which gap G is nullified and flanges 3,4 are completely in contact with each other (figure 2, figure 3).

Naturally, the shape of the sheets which is shown in the annexed drawings is given purely by way of non limiting example. This shape may be also completely different, while the fact remains that at least one of the sheets must undergo an elastic deformation following closing of the clamping device and that G must be defined between the overlapped sheets when the obove mentioned elastic deformation has not yet taken place.

According to the invention, after that the two sheets 1,2 have been arranged in the opened clamping device 5, as shown in figure 1, the control means 13 control the actuating means 10 so as to cause closing of the clamping device 5 and up to the condition of complete contact between flanges 3,4 (figures 2,3). This condition is detected when the pressure sensor 11 informs the control means 13 that a predetermined level of pressure has been reached. This condiction is achieved, as already indicated, following an elastic deformation of sheet 1. In practice, in the case of the specific illustrated embodiment, flange 3 of sheet 1 has its edge 3a in coctact with the flange 4 and has a slant upward direction starting from this edge. The pressure applied by the clamping member 8 causes the elastic deformation, since the latter forms part of a more complex structure (see for example figure 6) wich does not allow sheet 1 to rotate arround the conctact area on the sheet 4.

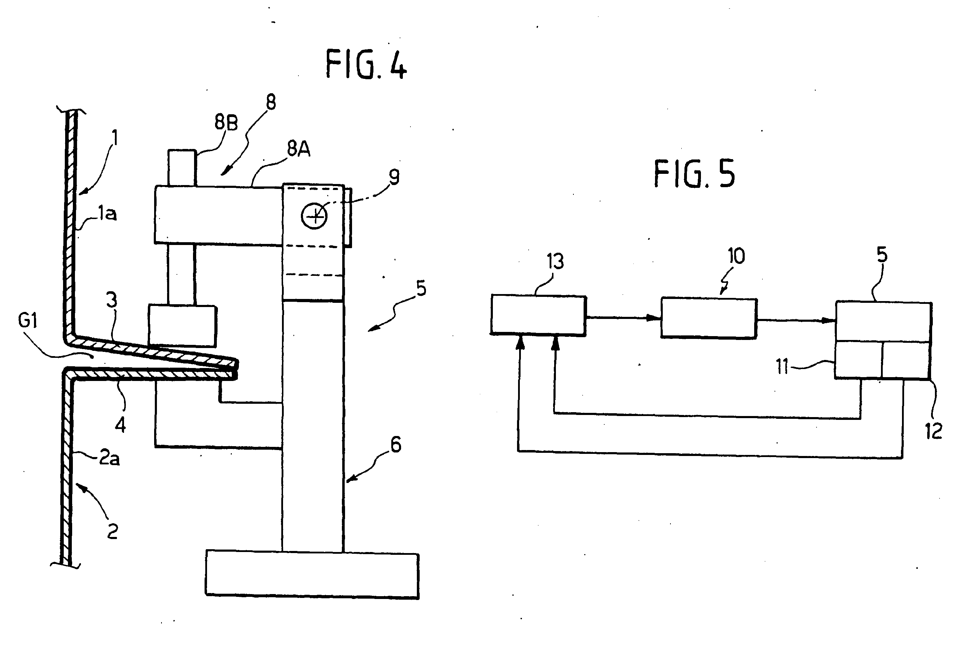

Once the condition of the complete contact of flanges 3,4 has been reached (figure 2) the control means 13 control the actuating means 10 so has to move the clamping member 8 back towards its inoperative position through a limited length, until reaching a predetermined position (figure 4) in which the two flanges define a gap G₁ of substantially predetermined dimensions.

This position is identified by control means 13 with the aid of the position sensor 12. In the case of the illustrated example, this result is achieved by providing the member 8 with a main part 8A and an active part 8B slideable with respect to the main part 8A. However, it is conceivable to obtain the required result by rotating the entire member 8 backwardly.

Once the condition illustrated in figure 4 has been reached, the welding operation is started. Naturally, the presence of G₁ does not jeopardize welding, since in the area affected by the laser beam the welding melted bath fills this gap locally.

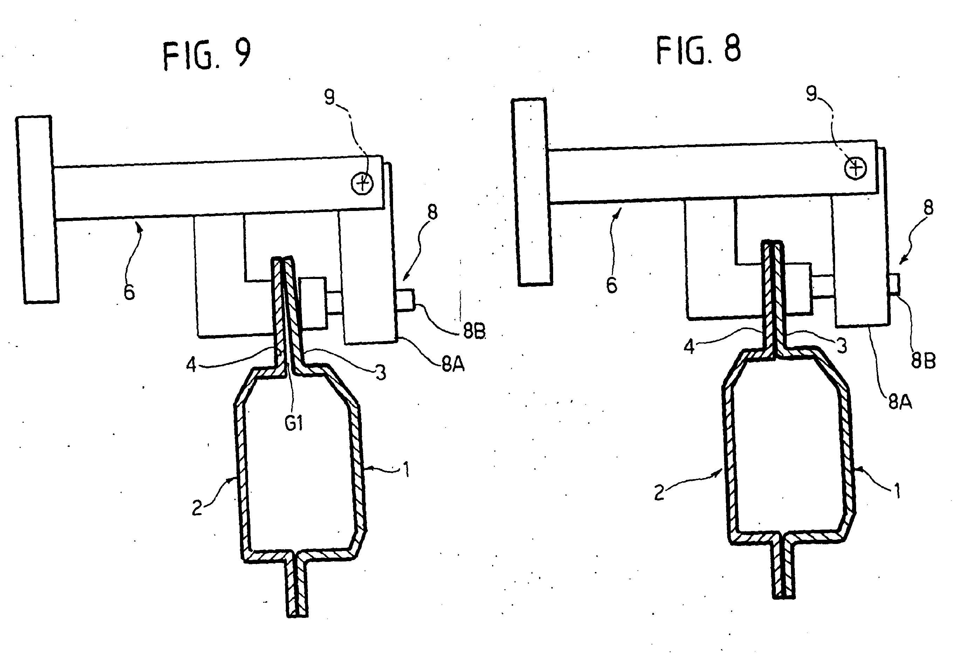

With reference to figure 6, which relates to an example of application, of the method according to the invention to welding of the outer and inner metal sheets constituting the body of a motor-vehicle along the base portion of a door aperture, the welding device is driven to carry out laser welding along portions W (figure 6). Figures 7 to 9 specifically show the shape of the sheets to be welded in this starting stage of the method, in the intermediate stage where the flanges to be welded are completely in contact (figure 8) and in the stage in which the flanges are partially spaced part, during which welding is carried out (figure 9).

As already indicated, the structure of the welding devices and the means for moving the laser beam are not shown, since they can be made in any known way. Naturally, applications of the invention are not excluded in which it is the piece to be welded which moves relative to the laser beam.

As clearly apparent from the foregoing description, the invention lies in providing a gap G₁ between two zinc-plated steel sheets which are to be welded by a laser beam, in a simple and efficent manner, whitout requiring operations for permanently deforming the sheets before welding, or for adding spacing elements there between. While laser welding is carried out, the presence of G₁ enables the zink vapours to escape, so that these vapours are not compelled to pass through the welding bath and therefore do not generate any welding defects.

Obviously, the invention is applicable both when all the sheets have a protective layer, and also when only one of them has this layer.

Furthermore, the application of the invention is not excluded also too non-protected sheets.

Naturally, while the principle of the invention remains the same, the details of contruction and the embodiments may widely vary with respect to what has been described and illustrated purely by way of example, without departing from the scope of the present invention, as defined by the claims.

## Claims

1. Method for laser welding of two or more metal sheets (1,2) which are overlapped with each other,
wherein at least one of the sheets (1,2) has a protective layer (la, 2a) on its surface in contact with another sheet, said layer being made of a material having a vaporization temperature lower than the melting temperature of the metal forming the sheet,
wherein the sheets (1,2) to be welded are held during the welding operation with the aid of sheet deforming means (5) which are moveable between an inoperative condition and an operative condition to deform one of the overlapped sheets (1,2),
wherein welding is carried out by directing a laser beam (L) at the welding area (W) of the overlapped sheets (1,2), and ..
wherein, before welding is carried out, the sheet deforming means are moved from their inoperative condition to their operative condition to deform one of the overlapped sheets,
**characterised in that** the deforming means are clamping means which press the sheets against each other when brought in their operative condition,
**in that** at least one of the sheets (1,2) is shaped or arranged such that when the clamping means (5) are brought from their inoperative condition to their operative condition, in which the clamping means (5) press the sheets (1,2) against each other, this sheet (1) undergoes an elastic deformation from a rest condition in which a gap (G) is defined between this sheet and the adjacent sheet (2), to a deformed condition in which this gap is nullified and the sheets are completely in contact with each other at the welding area, and
**in that**, before welding is carried out, the clamping means are controlled according to the following sequence of stages:
in a first stage the clamping means (5) are brought from their inoperative condition to their operative condition so as to ensure the complete contact of the sheets (1,2) to be welded due to said elastic deformation,
in a second stage the clamping means (5) are moved back towards their inoperative condition, through a predetermined limited length, so as to create again a gap (G₁) having substantially predetermined dimensions between the sheets (1,29) to be welded by exploiting the elastic return of the sheet (1) which is elastically deformed during the first stage,
the clamping means (5) are kept in the condition reached thereby during welding so that the vapours of protective material which are generating during welding can escape through said gap (G₁);
said clamping means being provided with sensor means able to detect the reaching of the condition of complete contact of the sheets (1,2) at the end of said first stage.

2. Welding method according to claim 1, **characterised in that** the clamping means (5) comprise at least one movable member (8) which is movable between an inoperative position and an operative position by actuating means which are controlled in position.

3. System for laser welding of two or more metal sheets which are overlapped with each other,
wherein, in use, at least one of the sheets has a protective layer (1a, 2a) on its surface in contact with another sheet, said layer of protective material having a vaporization temperature lower than the melting temperature of the material forming the sheets,
said system comprising:
sheet deforming means (5) for holding in position the sheets (1,2) to be welded during the welding operation, said sheet deforming means (5) being movable between an inoperative condition and an operative condition to deform one of the overlapped sheets (1,2),
actuating means (10) for said sheet deforming means (5), and
means for laser welding able to direct a laser beam (L) at the welding area (W) of the overlapped sheets (1,2),
**characterised in that** the deforming means are clamping means which in use press the sheets against each other when brought in their operative condition, and
**in that** said system further comprises an electronic control unit (13) which controls said actuating means (10) according to the following sequence of stages:
in a first stage the clamping means (5) are brought from their inoperative condition to their operative condition so as to ensure the complete contact of the sheets (1,2) to be welded due to said elastic deformation,
in a second stage the clamping means (5) are moved back towards their inoperative condition, through a predetermined limited length, so as to create again a gap (G₁) having substantially predetermined dimensions between the sheets (1,29 to be welded by exploiting the elastic return of the sheet (1) which is elastically deformed during the first stage,
the clamping means (5) are kept in the condition reached thereby during welding so that the vapours of protective material which are generating during welding can escape through said gap (G₁);
said clamping means (5) being provided with sensor means (11) adapted to send an output signal indicative of the condition of complete contact of the sheets to said electronic control unit (13) to cause the clamping means (5) to stop in the condition of complete contact of the sheets, at the end of said first stage.

4. Welding system according to claim 3, **characterised in that** the clamping means (5) comprise at least one movable member (8) movable between an inoperative position and an operative position and that said control means cause the clamping member (5) to stop at the end of said second stage, when they detect that a predetermined position has been reached.

5. Welding system according to claim 4, **characterised in that** said actuating means (10) are selected among electric motors, fluid actuators, piezoelectric actuators, shape memory alloy actuators or the like.

6. Welding system according to claim 3, **characterised in that** said clamping means comprise at least one clamping movable member (8) and said sensor means are pressure sensor means (11) able to detect the condition in which the clamping device keeps the sheets (1, 2) in complete contact with each other, so that said electronic control unit stops the clamping movement of said clamping member when a predetermined value of pressure is detected by said pressure sensor means.

7. Welding system according to claim 6, **characterised in that** the clamping movable member (8) comprises a main part (8A) which is pivotally connected to a support (6) and an active part (8B) which is slidably mounted on the main part (8A), said active part been movable with respect to the main part during said second stage, after that the two parts (8A, 8B) have rotated together with respect to the support (6) during said first stage.

8. Welding system according to claim 6, **characterised in that** the clamping movable member (8) comprises a main part (8A) pivotally connected to a support (6) and an active part (8B) which is rigidly connected to the main part (8A), the entire structure of the movable member being moved back towards its inoperative position in said second stage.

9. Welding system according to claim 7, **characterised in that** also said support is movable between an inoperative position and an operative position.

10. Welding system according to claim 7, **characterised in that** the entire structure of the device is mounted with the possibility of a limited adjusting movement, for self-centering of the structure to be welded.

## Patentansprüche

1. Verfahren zum Laserschweißen von zwei oder mehr sich überlappenden Metallblechen (1, 2),
wobei wenigstens eines dieser Bleche (1, 2) eine Schutzschicht (1a, 2a) auf seiner Oberfläche hat, welche in Kontakt mit einem anderen Blech ist, wobei die Schicht aus einem Material hergestellt ist mit einer Verdampfungstemperatur kleiner als die Schmelztemperatur des Metalls, welches das Blech bildet,
wobei die Bleche (1, 2), welche geschweißt werden sollen, gehalten werden während des Schweißvorgangs mit Hilfe von Blechverformungsmitteln (5), welche beweglich sind zwischen einem nicht betriebsfähigen Zustand und einem betriebsfähigen Zustand zum Verformen eines der überlappenden Bleche (1, 2),
wobei das Schweißen ausgeführt wird durch Führen eines Laserstrahls (L) in dem Schweißbereich (W) der überlappenden Bleche (1, 2), und
wobei, bevor das Schweißen ausgeführt wird, die Blechverformungsmittel bewegt werden von ihrem nicht betriebsfähigen Zustand in ihren betriebsfähigen Zustand zum Verformen eines der überlappenden Bleche,
**dadurch gekennzeichnet, dass** die Verformungsmittel Einspannmittel sind, welche die Bleche gegeneinander pressen, wenn sie in ihren betriebsfähigen Zustand gebracht werden,
**dadurch**, dass wenigstens eines der Bleche (1, 2) so geformt oder angeordnet ist, dass wenn die Einspannmittel (5) von ihrem nicht betriebsfähigen Zustand in ihren betriebsfähigen Zustand, in welchem die Einspannmittel (5) die Bleche (1, 2) gegeneinander pressen, gebracht werden, dieses Blech (1) eine elastische Verformung erfährt von einem Ruhezustand, in welchem eine Lücke (G) definiert ist zwischen diesem Blech und dem angrenzenden Blech (2), in einen verformten Zustand, in welchem diese Lücke aufgehoben ist und die Bleche komplett in Kontakt miteinander sind in dem Schweißbereich, und
**dadurch**, dass, bevor das Schweißen ausgeführt wird, die Einspannmittel gesteuert werden gemäß der folgenden Abfolge von Stufen:
in einer ersten Stufe werden die Einspannmittel (5) von ihrem nicht betriebsfähigen Zustand in ihren betriebsfähigen Zustand gebracht, so dass der komplette Kontakt der Bleche (1, 2), welche geschweißt werden sollen, aufgrund der elastischen Verformung gewährleistet wird,
in einer zweiten Stufe werden die Einspannmittel (5) zurück bewegt in Richtung ihres nicht betriebsfähigen Zustands, durch eine vorbestimmte begrenzte Länge, so dass wieder eine Lücke (G₁) geschaffen wird mit im Wesentlichen vorbestimmten Abmessungen zwischen den Blechen (1, 2), welche geschweißt werden sollen, durch Ausnutzen der elastischen Rückverformung des Bleches (1), welches elastisch verformt wird während der ersten Stufe,
wobei die Einspannmittel (5) in dem Zustand gehalten werden, welcher davon während des Schweißens erreicht wurde, so dass die Dämpfe von schützendem Material, welche während des Schweißens erzeugt werden, durch die Lücke (G₁) entweichen können;
wobei die Einspannmittel mit Sensormitteln vorgesehen sind, welche das Erreichen des Zustandes des kompletten Kontakts der Bleche (1, 2) am Ende der ersten Stufe detektieren können.

2. Schweißverfahren nach Anspruch 1, **dadurch gekennzeichnet, dass** die Einspannmittel (5) wenigstens ein bewegliches Element (8) umfassen, welches beweglich ist zwischen einer nicht betriebsfähigen Position und einer betriebsfähigen Position durch Betätigungsmittel, welche in Position gesteuert werden.

3. System zum Laserschweißen von zwei oder mehr überlappenden Metallblechen,
wobei während des Gebrauchs wenigstens eines der Bleche eine Schutzschicht (1a, 2a) auf seiner Oberfläche in Kontakt mit einem anderen Blech hat, wobei die Schicht aus schützendem Material eine Verdampfungstemperatur niedriger als die Schmelztemperatur des Materials, welches die Bleche bildet, hat,
wobei das System umfasst:
Blechverformungsmittel (5) zum Halten der Bleche (1, 2), welche geschweißt werden sollen, in Position während des Schweißvorgangs, wobei die Blechverformungsmittel (5) beweglich sind zwischen einem nicht betriebsfähigen Zustand und einem betriebsfähigen Zustand zum Verformen eines der überlappenden Bleche (1, 2),
Betätigungsmittel (10) für die Blechverformungsmittel (5), und
Mittel zum Laserschweißen, welche einen Laserstrahl (L) in einem Schweißbereich (W) der überlappenden Bleche (1, 2) lenken kann,
**dadurch gekennzeichnet, dass** die Verformungsmittel Einspannmittel sind, welche während des Gebrauchs die Bleche gegeneinander drücken, wenn sie in ihren betriebsfähigen Zustand gebracht worden sind, und
**dadurch**, dass das System weiterhin umfasst eine elektronische Steuereinheit (13), welche die Betätigungsmittel (10) gemäß der folgenden Abfolge von Stufen steuert:
in einer ersten Stufe werden die Einspannmittel (5) von ihrem nicht betriebsfähigen Zustand in ihren betriebsfähigen Zustand gebracht, um den kompletten Kontakt der Bleche (1, 2), welche geschweißt werden sollen, aufgrund ihrer elastischen Verformung zu gewährleisten,
in einer zweiten Stufe werden die Einspannmittel (5) in Richtung ihres nicht betriebsfähigen Zustands zurück bewegt, durch eine vorbestimmte begrenzte Länge, um wieder eine Lücke (G₁) zu schaffen mit im Wesentlichen vorbestimmten Abmessungen zwischen den Blechen (1, 2), welche geschweißt werden sollen, durch Ausnutzen der elastischen Rückverformung des Bleches (1), welches elastisch verformt wird während der ersten Stufe,
die Einspannmittel (5) werden in dem Zustand gehalten, welcher davon während des Schweißens erreicht wird, so dass die Dämpfe des schützenden Materials, welche während des Schweißens erzeugt werden, durch die Lücke (G₁) entweichen können;
wobei die Einspannmittel (5) mit Sensormitteln (11) vorgesehen sind, welche angepasst sind zum Senden eines Ausgangssignals, welches indikativ ist für den Zustand des kompletten Kontakts der Bleche (1, 2), an die elektronische Steuereinheit (13), um zu verursachen, dass die Einspannmittel (5) in einem Zustand des kompletten Kontakts der Bleche stoppen am Ende der ersten Stufe.

4. Schweißsystem nach Anspruch 3, **dadurch gekennzeichnet, dass** die Einspannmittel (5) wenigstens ein bewegliches Element (8) umfassen, welches beweglich ist zwischen einem nicht betriebsfähigen Zustand und einem betriebsfähigen Zustand, und dass die Steuermittel verursachen, dass das Einspannelement (5) stoppt am Ende der zweiten Stufe, wenn sie detektieren, dass eine vorbestimmte Position erreicht wurde.

5. Schweißsystem nach Anspruch 4, **dadurch gekennzeichnet, dass** die Betätigungsmittel (10) ausgewählt werden aus elektrischen Motoren, Fluidaktuatoren, piezoelektrischen Aktuatoren, Formgedächtnislegierungsaktuatoren oder dergleichen.

6. Schweißsystem nach Anspruch 3, **dadurch gekennzeichnet, dass** die Einspannmittel wenigstens ein Einspannbewegungselement (8) umfasst und die Sensormittel Drucksensormittel (11) sind, welche den Zustand, in welchem die Einspannvorrichtung die Bleche (1, 2) in kompletten Kontakt miteinander hält, detektiert, so dass die elektronische Steuereinheit die Einspannbewegung des Einspannelements stoppt, wenn ein vorbestimmter Wert des Druckes detektiert wird von den Drucksensormitteln.

7. Schweißsystem nach Anspruch 6, **dadurch gekennzeichnet, dass** das Einspannbewegungselement (8) einen Hauptteil (8A) umfasst, welcher drehbar verbunden ist mit einem Träger (6) und ein aktives Teil (8B), welches verschiebbar angebracht ist auf dem Hauptteil (8A), wobei das aktive Teil beweglich ist in Bezug auf das Hauptteil während der zweiten Stufe, nachdem die zwei Teile (8A, 8B) zusammen rotiert sind in Bezug auf den Träger (6) während der ersten Stufe.

8. Schweißsystem nach Anspruch 6, **dadurch gekennzeichnet, dass** das Einspannbewegungselement (8) einen Hauptteil (8A) umfasst, welcher drehbar verbunden ist mit einem Träger (6), und ein aktives Teil (8B), welches starr verbunden ist mit dem Hauptteil (8A), wobei die gesamte Struktur des beweglichen Elements zurück bewegt wird in Richtung seiner nicht betriebsfähigen Position in der zweiten Stufe.

9. Schweißsystem nach Anspruch 7, **dadurch gekennzeichnet, dass** auch der Träger beweglich ist zwischen einer nicht betriebsfähigen Position und einer betriebsfähigen Position.

10. Schweißsystem nach Anspruch 7, **dadurch gekennzeichnet, dass** die gesamte Struktur der Vorrichtung angebracht ist mit der Möglichkeit einer begrenzten Einstellungsbewegung zum Selbstzentrieren der Struktur, welche geschweißt werden soll.

## Revendications

1. Procédé pour souder par laser deux ou plusieurs tôles (1, 2) qui se recouvrent l'une l'autre,
dans lequel au moins une des feuilles (1, 2) comporte une couche protectrice (la, 2a) sur sa surface en contact avec une autre feuille, ladite couche étant faite d'un matériau ayant une température de vaporisation inférieure à la température de fusion du métal formant la feuille,
dans lequel les feuilles (1, 2) devant être soudées sont maintenues lors de l'opération de soudage à l'aide de moyens de déformation de feuille (5) qui sont mobiles entre une condition inactive et une condition active afin de déformer l'une des feuilles se recouvrant (1, 2),
dans lequel le soudage est réalisé en dirigeant un faisceau laser (L) au niveau de la zone de soudage (W) des feuilles se recouvrant (1, 2), et
dans lequel, avant de réaliser le soudage, les moyens de déformation de feuille sont déplacés depuis leur condition inactive vers leur condition active afin de déformer l'une des feuilles se recouvrant,
**caractérisé en ce que** les moyens de déformation sont des moyens de serrage qui appuient les feuilles l'une contre l'autre lorsqu'ils sont amenés dans leur condition active,
**en ce qu'**au moins l'une des feuilles (1, 2) est formée ou agencée de telle sorte que lorsque les moyens de serrage (5) sont amenés depuis leur condition inactive jusqu'à leur condition active, dans laquelle les moyens de serrage (5) appuient les feuilles (1, 2) l'une contre l'autre, cette feuille (1) subit une déformation élastique à partir d'une condition de repos dans laquelle un espace (G) est défini entre cette feuille et la feuille adjacente (2), vers une condition déformée dans laquelle cet espace est annulé et les feuilles sont entièrement en contact l'une avec l'autre au niveau de la zone de soudage, et
**en ce que**, avant de réaliser le soudage, les moyens de serrage sont commandés selon la séquence suivante d'étapes :
dans une première étape les moyens de serrage (5) sont amenés depuis leur condition inactive jusqu'à leur condition active de manière à garantir le contact total des feuilles (1, 2) devant être soudées en raison de ladite déformation élastique,
dans une seconde étape les moyens de serrage (5) sont ramenés vers leur condition inactive, sur une longueur limitée prédéterminée, de manière à créer à nouveau un espace (G₁) ayant des dimensions sensiblement prédéterminées entre les feuilles (1, 2) devant être soudées en utilisant le retour élastique de la feuille (1) qui est déformée élastiquement lors de la première étape,
les moyens de serrage (5) sont maintenus dans la condition atteinte ainsi lors du soudage de sorte que les vapeurs du matériau protecteur qui se génèrent lors du soudage peuvent s'échapper par ledit espace (G₁) ;
lesdits moyens de serrage étant munis de moyens de capteur pouvant détecter que la condition du contact total des feuilles (1, 2) à la fin dudit premier étage est atteinte.

2. Procédé de soudage selon la revendication 1, **caractérisé en ce que** les moyens de serrage (5) comprennent au moins un élément mobile (8) qui est mobile entre une position inactive et une position active en actionnant des moyens qui sont commandés en position.

3. Système pour souder par laser deux ou plusieurs tôles qui se recouvrent l'une l'autre,
dans lequel, lors de l'utilisation, au moins une des feuilles comporte une couche protectrice (1a, 2a) à sa surface en contact avec une autre feuille, ladite couche de matériau protecteur ayant une température de vaporisation inférieure à la température de fusion du matériau formant les feuilles,
ledit système comprenant :
des moyens de déformation de feuille (5) destinés à maintenir en position les feuilles (1, 2) devant être soudées lors de l'opération de soudage, lesdits moyens de déformation de feuille (5) étant mobiles entre une condition inactive et une condition active afin de déformer l'une des feuilles se recouvrant (1, 2),
des moyens d'actionnement (10) pour lesdits moyens de déformation de feuille (5), et
des moyens pour souder par laser pouvant diriger un faisceau laser (L) au niveau de la zone de soudage (W) des feuilles se recouvrant (1, 2),
**caractérisé en ce que** les moyens de déformation sont des moyens de serrage qui, lors de l'utilisation, appuient les feuilles l'une contre l'autre lorsqu'elles sont amenées dans leur condition active, et
**en ce que** ledit système comprend en outre une unité de commande électronique (13) qui commande lesdits moyens d'actionnement (10) selon la séquence suivante d'étapes :
dans une première étape les moyens de serrage (5) sont amenés depuis leur condition inactive jusqu'à leur condition active de manière à garantir le contact total des feuilles (1, 2) devant être soudées en raison de ladite déformation élastique,
dans une seconde étape les moyens de serrage (5) sont renvoyés vers leur condition inactive, sur une longueur limitée prédéterminée, de manière à créer à nouveau un espace (G₁) ayant des dimensions sensiblement prédéterminées entre les feuilles (1, 2) devant être soudées en utilisant le retour élastique de la feuille (1) qui est déformée élastiquement lors de la première étape,
les moyens de serrage (5) sont maintenus dans la condition atteinte ainsi lors du soudage de sorte que les vapeurs du matériau protecteur qui se génèrent lors du soudage peuvent s'échapper par ledit espace (G1₎ ;
lesdits moyens de serrage (5) étant munis de moyens de capteur (11) adaptés pour envoyer un signal de sortie indicatif de la condition du contact total des feuilles à ladite unité de commande électronique (13) pour amener les moyens de serrage (5) à s'arrêter dans la condition de contact total des feuilles, à la fin de ladite première étape.

4. Système de soudage selon la revendication 3, **caractérisé en ce que** les moyens de serrage (5) comprennent au moins un élément mobile (8) pouvant se déplacer entre une position inactive et une position active et **en ce que** lesdits moyens de commande amènent l'élément de serrage (5) à s'arrêter à la fin de ladite seconde étape, lorsqu'ils détectent qu'une position prédéterminée a été atteinte.

5. Système de soudage selon la revendication 4, **caractérisé en ce que** lesdits moyens d'actionnement (10) sont sélectionnés parmi des moteurs électriques, des actionneurs à fluide, des actionneurs piézoélectriques, des actionneurs en alliage à mémoire de forme ou analogues.

6. Système de soudage selon la revendication 3, **caractérisé en ce que** lesdits moyens de serrage comprennent au moins un élément mobile de serrage (8) et lesdits moyens de capteur sont des moyens de capteur de pression (11) pouvant détecter la condition dans laquelle le dispositif de serrage maintient les feuilles (1, 2) en contact total l'une avec l'autre, de sorte que ladite unité de commande électronique arrête le mouvement de serrage dudit élément de serrage lorsqu'une valeur prédéterminée de pression est détectée par lesdits moyens de capteur de pression.

7. Système de soudage selon la revendication 8, **caractérisé en ce que** l'élément mobile de serrage (8) comprend une partie principale (8A) qui est raccordée avec faculté de rotation à un support (6) et une partie active (8B) qui est montée de manière coulissante sur la partie principale (8A), ladite partie active étant mobile par rapport à la partie principale lors de ladite seconde étape, après que les deux parties (8A, 8B) ont tourné ensemble par rapport au support (6) lors de ladite première étape.

8. Système de soudage selon la revendication 6, **caractérisé en ce que** l'élément mobile de serrage (8) comprend une partie principale (8A) raccordée avec faculté de rotation à un support (6) et à une partie active (8B) qui est raccordée de manière rigide à la partie principale (8A), la structure entière de l'élément mobile étant renvoyée vers sa position inactive dans ladite seconde étape.

9. Système de soudage selon la revendication 7, **caractérisé en ce que** ledit support est également mobile entre une position inactive et une position active.

10. Système de soudage selon la revendication 7, **caractérisé en ce que** la structure entière du dispositif est montée avec la possibilité d'un mouvement de réglage limité, pour un autocentrage de la structure devant être soudée.
